Europäisches Patentamt

(19) European Patent Office

Office européen des brevets

(11) Publication number: **0 126 766**
**B1**

(12) **EUROPEAN PATENT SPECIFICATION**

(45) Date of publication of patent specification: **15.07.87**

(51) Int. Cl.⁴: **C 09 J 3/16**

(21) Application number: **84900181.3**

(22) Date of filing: **21.11.83**

(86) International application number:
**PCT/US83/01821**

(87) International publication number:
**WO 84/02144 07.06.84 Gazette 84/14**

(54) **COPOLYESTER ADHESIVE BLEND.**

(30) Priority: **01.12.82 US 446083**

(43) Date of publication of application:
**05.12.84 Bulletin 84/49**

(45) Publication of the grant of the patent:
**15.07.87 Bulletin 87/29**

(84) Designated Contracting States:
**DE FR GB**

(56) References cited:
**EP-A-0 036 062**
**EP-A-0 099 394**
**FR-A-2 073 667**
**FR-A-2 426 075**
**US-A-4 131 714**
**US-A-4 390 668**

(73) Proprietor: **EASTMAN KODAK COMPANY**
**343 State Street**
**Rochester New York 14650 (US)**

(72) Inventor: **McCONNELL, Richard, Leon**
**421 Manderly Road**
**Kingsport, TN 37660 (US)**
Inventor: **MEYER, Max, Frederick, Jr.**
**509 Altamont Drive**
**Kingsport, TN 37663 (US)**

(74) Representative: **Parent, Yves et al**
**Kodak-Pathé Département Brevets et Licences**
**Centre de Recherches et de Technologie Zone**
**Industrielle**
**F-71102 Chalon-sur-Saone Cédex (FR)**

Courier Press, Leamington Spa, England.

**0 126 766**

## Description

This invention relates to certain copolyester blends which have been found to be useful as adhesives, especially for bonding fabric, fibers and the like.

Fabric adhesives are often used on fusible interlinings, which are materials such as fabric which have been coated on one side with a discontinuous pattern of adhesive. When the interlining is bonded to a face fabric in a garment, it provides body and shape to the garment without impairing the ability of the fabric to breathe. Fusible interlinings are used in the manufacture of suits, in shirt collars and cuffs, and in the waistbands of trousers. In the manufacture of suits, polycarbonate basting threads are frequently used to temporarily hold the parts of the suit in place. After the suit is completed, a solvent such as perchloroethylene or trichloroethylene is used to embrittle the polycarbonate thread so that it may be brushed from the fabric. Binder fibers are used with nonwovens, which are formed from matrix fibers into a web, sheet, or mat. The binder fibers give strength to the web, mat, or sheet by bonding it together.

Certain polyesters are known to be useful for fusible interlining adhesives and binder fibers. However, these polymers also tend to have certain disadvantages. For example, one polyester of interest is the copolyester of terephthalic acid, adipic acid, ethylene glycol and 1,4-butanediol as described in U.S. Patent No. 3,699,921. Such polyesters tend to block in pellet form and fumed silica must be added in significant amounts to make it possible to grind this polymer into powder. Excessive amounts of fumed silica in the powder, however, prevents good coatability and good fusion of the powders on the fusible interlining fabric when applied with powder point applicators. Thus, these adhesives are not easily applied.

In French Patents 2,073,667 and 2,426,075 are disclosed blends of crystallizable copolyesters having an improved adhesivity. However, these copolyesters are not used for bonding heat-sensitive materials such as fabrics, and are not helpful as regards the bounding problems concerned with the present invention.

EP 36,062 discloses an adhesive comprising a crystallizable copolyester having an improved heat stability. The copolyester described is not blended with an amorphous copolyester and no indication is reported concerning the ability of the copolyester to be ground in powder, and to be resistant to dry cleaning solvents.

Amorphous polyesters cannot be used as fusion adhesives in which resistance to dry-cleaning agents and high set-up speed are required. In like manner, those polyesters are undesirable which have too little crystallinity, because they solidify too slowly and consequently do not lose their surface stickiness for long periods of time.

Certain low melting, crystallizable polyesters are useful for bonding fabrics at temperatures (120—150°C.) which do not damage the fabrics. These bonds generally show excellent resistance to laundering and dry cleaning treatments. Thus, these materials are useful in film, fusible interlining, or melt blown web form to laminate fabrics in the construction of wearing apparel. However, in applications where high temperature resistance is required, the low melting polyesters are not completely satisfactory.

In U.S. Patent 4,131,714 there is described an adhesive composition which is a blend of a crystalline polyester having a very high melting point, e.g., 243°C, and an amorphous polyester. The blend is used as a solution in an organic solvent usually cresylic acid. This alone makes the composition not useful as a fabric adhesive which must be a solid, e.g., a powder. Further, the cresylic acid is probably necessary in order to provide a plasticizer for the very high melting crystalline polyester used so as to make the composition usable at reasonable temperatures. Cresylic acid would be unsuitable in a fabric adhesive because it would attack the fabric and could irritate the skin of a wearer of the fabric. The compositions of this patent are used in electrical equipment.

Thus, the problem to be solved is to provide a fabric adhesive which is easily applied to fabrics and which shows good high temperature resistance.

This problem is solved by providing adhesive compositions comprising a blend of

a) 10—99% by weight of a crystallizable copolyester having a melting point of 80—130°C., a heat of fusion of 1—10 calories per gram and an I.V. of 0.4—1.2 dl/g, said copolyester being derived from an acid selected from the group consisting of terephthalic acid and 1,4-cyclohexanedicarboxylic acid and a glycol selected from the group consisting of 1,4-butanediol, 1,6-hexanediol and mixtures of 1,4-butanediol and 1,6-hexanediol, said copolyester also being derived from about 20—60 mole % of a co-acid or a co-glycol, or about 20—75 mole % of a combination of a co-acid and a co-glycol, said co-acid and co-glycol being selected from the group consisting of isophthalic acid, $C_3$—$C_{12}$ aliphatic dibasic acids, aliphatic and cycloaliphatic glycols having 2—8 carbon atoms and diethylene glycol, and

b) 90—1% by weight of a substantially amorphous copolyester having a glass transition temperature of 50°C. or higher, a heat of fusion of less than 1 calorie per gram and an I.V. of 0.4—1.2 dl/g, said copolyesters being derived from at least one acid selected from the group consisting of terephthalic acid, isophthalic acid, and 1,4-cyclohexanedicarboxylic acid, and at least one glycol selected from the group consisting of ethylene glycol, diethylene glycol, and 1,4-cyclohexanedimethanol, with the proviso that said substantially amorphous copolyester contains at least two acids or at least two glycols, the second acid or glycol being present in an amount of 25—60 mole %.

The blends contain preferably 30 to 95%, of the crystallizable copolyester and preferably 70 to 5% of the substantially amorphous copolyester.

Useful crystalline polyesters are derived from an acid selected from the group consisting of

2

terephthalic acid and 1,4-cyclohexanedicarboxylic acid and a glycol selected from the group consisting of 1,4-butanediol, 1,6-hexanediol and mixtures of 1,4-butanediol and 1,6-hexanediol, the copolyester also being derived from about 20—60 mole percent of a co-acid or a co-glycol, or about 20—75 mole percent of a combination of a co-acid and a co-glycol, the co-acid and co-glycol being selected from the group consisting of isophthalic acid, $C_3$—$C_{12}$ aliphatic dibasic acids, aliphatic and cycloaliphatic glycols having 2—8 carbon atoms and diethylene glycol. These polyesters preferably have a heat fusion of 4.18—41.8 joules per gram and I.V. (inherent viscosity) of 0.4—1.2 dl/g, preferably between 0.75 and 0.95 dl/g.

Crystallizable copolyesters of particular interest include 1) poly(butylene terephthalate) co-polyesters containing 20 mole percent glutaric acid and 45 mole percent diethylene glycol, 2) poly(butylene terephthalate) copolyesters containing 30 mole percent glutaric acid and 45 mole percent diethylene glycol, 3) poly(butylene terephthalate) copolyesters containing 25 mole percent glutaric acid and 40 mole percent diethylene glycol, 4) poly(hexamethylene terephthalate) copolyesters containing 20 mole percent isophthalic acid and 20 mole percent 1,4-butanediol, 5) poly(hexamethylene terephthalate) copolyesters containing 10 mole percent isophthalic acid and 40 mole percent 1,4-butanediol, 6) poly(hexamethylene terephthalate) copolyesters containing 20 mole percent 1,4-butanediol, 7) poly(butylene terephthalate) copolyesters containing 50 mole percent isophthalic acid, 8) poly(butylene 1,4-cyclohexanedicarboxylate) copolyesters containing 25 mole percent glutaric acid and 25 mole percent diethylene glycol, 9) poly(hexamethylene terephthalate) copolyesters containing 20 mole percent glutaric acid and 20 mole percent diethylene glycol and the like.

Useful amorphous copolyesters are derived from at least one acid selected from the group consisting ·of terephthalic acid, isophthalic acid, and 1,4-cyclohexanedicarboxylic acid, and at least one glycol selected from the group consisting of ethylene glycol, diethylene glycol, and 1,4-cyclohexanedimethanol, with the proviso that the copolyester contains at least two acids or at least two glycols, the second acid or glycol being present in an amount of 25—60 mole percent.

Substantially amorphous copolyesters of particular interest include polyesters having Tg values above 50°C, preferably 50—90°C, heats of fusion $\Delta H_f$ of less than 4.18 joules per gram and inherent viscosities of 0.4 to 1.2 dl/g. Some typical polymers include 1) poly(ethylene terephthalate) copolyesters containing 31 mole percent 1,4-cyclohexanedimethanol, 2) poly(1,4-cyclohexylenedimethylene terephthalate) copolyesters containing 40 mole percent ethylene glycol, 3) poly(1,4-cyclohexylenedimethylene terephthalate) copolyesters containing 50 mole percent isophthalic acid, 4) poly(ethylene isophthalate) copolyesters containing 50 mole percent 1,4-cyclohexanedimethanol, 5) poly(ethylene 1,4-cyclohexanedicarboxylate) copolyesters containing 50 mole percent 1,4-cyclohexanedimethanol, 6) poly(ethylene terephthalate) copolyesters containing 37 mole percent diethylene glycol, and the like.

The low melting, crystallizable copolyesters and substantially amorphous, high Tg copolyesters may be used in the form of powder blends or pellet blends. In general, the concentration of high Tg polyester present may range from about 1 to about 90 weight percent but the preferred range is about 5 to about 70 weight percent. A preferred blend is one wherein the crystallizable copolyester has an I.V. of 0.75—0.95 dl/g and is derived from 60—80 mole percent terephthalic acid, 40—20 mole percent glutaric acid, 45—65 mole percent 1,4-butanediol and 35—55 mole percent diethylene glycol, and said substantially amorphous copolyester has an I.V. of 0.45—0.80 dl/g, and is derived from at least 80 mole percent terephthalic acid, 60—80 mole percent ethylene glycol and 40—20 mole percent 1,4-cyclohexanedimethanol, said mole percentages being based ón 100 mole percent dicarboxylic acid and 100 mole percent glycol, and each of said copolyesters being present in amounts within the range of 30—70 weight percent based on their combined weight.

A typical crystallizable copolyester useful in this invention is as follows: Fifty-three and thirty-five hundredths grams of dimethyl terephthalate (0.275 mole), 36 grams (0.225 mole) of dimethyl glutarate, 55.35 grams (0.615 mole) of 1,4-butanediol, 40.8 grams (0.385 mole) of diethylene glycol, and 1 ml of n-butanol solution of titanium tetraisopropoxide which is 1.24 weight percent titanium are weighed into a 500-ml single-neck round-bottom flask equipped with a nitrogen inlet, stirrer, vacuum outlet, and a condensing flask. The flask is heated at 200°C for three hours with a nitrogen sweep over the reaction mixture. When the theoretical amount of methanol has distilled from the reaction mixture, the temperature is increased to 255°C at a reduced pressure of 13.3 to 66.6 Pa for one hour. The flask is then removed from the heat and allowed to cool as the polyester crystallizes. Gas chromatographic analysis of the hydrolyzed copolyester reveals the copolyester contains the following mole percentages of reaction residues: dimethyl terephthalate, 55 mole percent; dimethyl glutarate, 45 mole percent; 1,4-butanediol, 70 mole percent; and diethylene glycol, 30 mole percent. The copolyester has an inherent viscosity of 1.0 and a crystalline melting point of 115°C (DSC). The crystallization half time of this copolyester is 1.2 minutes at 60°C. The copolyester is an excellent fabric adhesive. Other crystallizable copolyesters may be made using the same technique, as is well known in the art.

Typical substantially amorphous copolyesters which may be used in accordance with this invention are commercially available. For example, KODAR© PETG copolyester 6763, product of Eastman Chemical Products, Inc., a copolyester of terephthalic acid and ethylene glycol modified with 1,4-cyclohexanedimethanol is particularly useful. Such substantially amorphous polyesters may be produced in accordance with known techniques, such as taught in U.S. Patent 2,901,466.

The copolyesters prepared as described above, are individually cryogenically ground, mixed and

3

screened using conventional procedures to obtain a powder that will pass a 70-mesh screen (200 micrometer particles). The powders may be applied from an engraved roll to an interlining fabric to form an interlining containing rows of adhesive dots across the interlining fabric. The interlining is used to bond two different face fabrics in the examples, wool/polyester and polyester/cotton. Unless otherwise indicated, the interlinings are bonded to face fabrics by pressing 10 cm squares of interlining to 10 cm squares of face fabric using either steam or an electric press. The bonded fabrics are laundered and dry cleaned, then cut into strips 2.54 cm wide and T-peel strengths reported are an average of three determinations per sample.

The crystalline melting point, $\Delta H_f$, and $T_g$ referred to above are measured by conventional means using a Differential Scanning Calorimeter.

Ester-forming derivatives of the acids referred to herein can be employed, if desired, to prepare the copolyesters of this invention. Examples of such ester forming derivatives are the anhydrides, esters and ester chlorides of such acids.

These copolyesters are readily put into powder form using conventional grinding techniques, preferably by cryogenic grinding. The powders are nonblocking and can be readily applied to fusible interlining fabrics from powder point applicators, from random sprinkling equipment, or in the form of a paste. The particles are finely divided, i.e., from about 1 micrometer to about 500 micrometers. In the application of powders from powder point applicators, it is desirable to have powders with a particle size range of 74—210 micrometers (200—70 mesh). For random sprinkling application on tightly woven or non-woven fabrics, particle size of 150—300 micrometers (100—50 mesh) is desirable. For random sprinkling on open-weaver fabrics such as rayon/cotton blends, powders with 300—500 micrometer size (50—35 mesh) are required. For application of powder in paste form, it is necessary to have very fine powders. For example, in paste form, powder size should be 1—80 micrometer (more than 200 mesh). In the case of binder fibers, such fibers can be produced using conventional spinning techniques well known in the art. The copolyesters may also be used in other forms, such as a film.

The "heat of fusion", $\Delta H_f$, of polymers is the amount of heat absorbed when crystallizable polymers are melted. $\Delta H_f$ values are readily obtained using Differential Scanning Calorimeters (DSC) (Perkins-Elmer). For example, one method for determining $\Delta H_f$ is described in *Journal of Applied Polymer Science, 20* 1209 (1976). Measurement of $\Delta H_f$ is also described in DuPont Thermal Analysis Bulletin No. 900—8 (1965). Qualitatively, it is possible to compare the degree of crystallinity of polymers by comparing their $\Delta H_f$ values.

When copolyesters prepared as described above are employed as melt adhesives to laminate various fabric systems, metal strips and the like, excellent bonds result. These bonds are found to be highly resistant to the action of dry cleaning solvents such as perchloroethylene. The strength of the bonds is determined by a peel test based on the ASTM "T-Peel Test" set forth on pages 609—611 of the 1972 edition of the Book of ASTM Standards, published by the American Society for Testing Materials, and more specifically identified as Test Number D-1876-69. Results are averages of three specimens.

If desired, dyes or dye receptive agents, color stabilizers and various other adjuvants may be added to the copolyester adhesives to meet certain specific end use requirements. Such additives would normally be added as such to the polymerization mixture in which the copolyester is produced.

As used herein, the inherent viscosity (I.V.) is measured at 25°C using 0.50 gram of copolyester per 100 ml. of a solvent consisting of 60 percent by weight phenol and 40 percent by weight tetrachloroethane.

The following examples are submitted for a better understanding of the invention.

Example 1

A poly(butylene terephthalate) copolyester containing 30 mole percent glutaric acid and 45 mole percent diethylene glycol (Polymer A) having an inherent viscosity of 0.85 dl/g (measured in 60/40 phenol-tetrachloroethane solvent) is cryogenically ground in a Pulverizer with liquid nitrogen. The powder is screened through U.S. Standard sieves to give particles of 40 to 70 mesh size (420 to 210 µm) (coarse powder).

A poly(ethylene terephthalate) copolyester containing 30 mole percent 1,4-cyclohexanedimethanol (Polymer B) having an inherent viscosity of 0.60 dl/g is cryogenically ground and sieved as described above to provide powder having a particle size of 40—70 mesh (420—210 µm).

Equal weights (100 g) of the coarse powder of each of these two copolyesters are dry blended in a polyethylene bag by rotating and shaking the bag for five minutes.

The coarse powder blend is randomly sprinkled on a bonded polyester nonwoven pad to give a uniform coating weight of 20 grams per 930 cm². The coated pad is placed in an air oven at 177°C for about three minutes to lightly fuse the powder. Less than 1% of the powder remains unfused after this treatment.

The coated pad 10 cm×15 cm is bonded to a 10 cm×15 cm fabric backed poly(vinyl chloride) sheeting on a Sentinel heat sealer (both platens heated; platens are 2.54 cm wide) at a bonding temperature of 155°C for 10 seconds at 1619 g/cm² gage bonding pressure to give a 15 cm wide bond. The bond is quenched immediately on a stone bench top. Five cm are trimmed from each end of the bond and three 2.54 cm T-peel bonds are cut from each sample. These T-peel bonds are tested on an Instron machine at 20 cm/min. crosshead speed. Bonds made with the powder blend have an average peel strength of 2270 g/linear cm at 23°C and 1394 g/linear cm at 80°C.

Similar bonds made with Polymer A coarse powder (no loss of powder after being fused on the pad) give an average peel strength of 1750 g/linear cm at 23°C but at 80°C the average peel strength is only 107 g/linear cm.

When attempts are made to fuse unmodified coarse powder of Polymer B on the nonwoven pad, much of the powder is unfused and the powder falls off the pad. This unmodified Polymer B is not useful in this bonding application.

Thus, this example illustrates that the powder blend composition provides good fusing properties and good peel strength at both 23°C and 80°C.

Equally good bonds are obtained when the nonmonomer pad is bonded to the fabric backed vinyl material using dielectric sealing equipment instead of a heat sealer.

Example 2

The procedure of Example 1 is repeated except that Polymer B is replaced with a poly(1,4-cyclohexylenedimethylene terephthalate) copolyester containing 40 mole percent ethylene glycol (Polymer C). Bonds made with a powder blend of equal weights of Polymer A and Polymer C give an average peel strength of 2500 g/linear cm at 23°C and 1770 g/linear cm at 80°C.

Example 3

The procedure of Example 1 is repeated except that Polymber B is replaced with a poly(ethylene terephthalate) copolyester containing 37 mole percent diethylene glycol (Polymer D). Bonds made with a powder blend of equal weights of Polymer A and Polymer D give an average T-peel strength of 1966 g/linear cm at 23°C and 1555 g/linear cm at 80°C.

Example 4

The procedure of Example 1 is repeated except that Polymer B is replaced with a poly(ethylene isophthalate) copolyester containing 50 mole percent 1,4-cyclohexanedimethanol (Polymer E). Bonds made with a powder blend of equal weights of Polymers A and E give an average T-peel strength of 2502 g/linear cm at 23°C and 2073 g/linear cm at 80°C.

Example 5

The procedure of Example 1 is repeated except that the powder blend is composed of 75 weight percent Polymer A and 25 weight percent Polymer B. Bonds made with this blend give an average T-peel strength of 2020 g/linear cm at 23°C and 536 g/linear cm at 80°C.

Example 6

The procedure of Example 1 is repeated except that Polymer A is replaced with poly(hexamethylene terephthalate) copolyester containing 20 mole percent isophthalic acid and 20 mole percent 1,4-butanediol (Polymer F). Polymer F has a melting point of 104°C, $\Delta H_f$ of 26.3 joules/g and an inherent viscosity of 0.72 dl/g. Bonds made with a powder blend of equal weights of Polymer B and Polymer F give an average T-peel strength of 2467 g/linear cm at 23°C and 500 g/linear cm at 80°C.

Example 7

The procedure of Example 1 is repeated except that equal weights of pellets of Polymers A and B are cryogenically coground in the pulverizer rather than being ground separately. Bonds made with coarse powder (420—210 µm) of the coground powder give an average T-peel strength of 2341 g/linear cm at 23°C and 1376 g/linear cm at 80°C.

Example 8

A pellet blend (0.32 cm pellets) of 10 weight percent Polymer B and 90 weight percent Polymer A is prepared in a V-Cone mixer by mixing for two hours. The pellet blend is extruded into 76 µm film on a 4.5 cm, 24/1 Prodex extruder at a melt temperature of 310°F. (155°C) and with a take-up roll maintained at 80°F (27°C) The pellet blend provides film that sets up faster and gives significantly less sticking to the chill roll than that obtained with Polymer A. The faster set up of the pellet blend in extruded film form and reduced sticking to the chill roll allows the film to be extruded at a faster rate. Polyester/cotton twill fabric is bonded with samples of this 76 µm film at 150°C on a Sentinel Heat Sealer. The bonds have a peel strength of 3664 g/linear cm and are resistant to laundering and dry cleaning treatments. Bonds were also made at 130°C and a peel strength of 2588 g/linear cm was obtained.

Similarly good results are obtained with a pellet blend of 1.0 weight percent of Polymer B and 99.0 weight percent of Polymer A.

Example 9

The procedure of Example 1 is repeated except that the powders of Polymer A and Polymer B are sieved to a particle size of 70—200 mesh (210—74 µm) (medium powder). A powder blend of 85 weight percent of medium powder of Polymer A and 15 weight percent of medium powder of Polymer B are dry blended in a polyethylene bag by tumbling and rotating the bag for five minutes.

Powderpoint fusible interlinings are prepared with this medium powder blend on a small-scale laboratory powderpoint machine. The powder is applied (21.7 g/m$^2$) from an engraved roll to a cotton interlining fabric to form an interlining containing rows of adhesive dots across the interlining fabric (34.9 dots/cm$^2$). The interlining is used to bond a polyester/cotton face fabric. The interlinings are bonded to the face fabrics by pressing four-inch squares of interlining to four-inch squares of polyester twill face fabric using an electrically heated garment press at 150°C. The bonded fabrics are laundered and dry cleaned, then cut into strips one inch wide. T-peel strengths are determined before and after laundering and dry cleaning. The T-peel strengths reported are an average of three determinations per sample. An initial peel strength of 429 g/linear cm at 23°C (30.5 cm/minute testing rate) is observed. After commercial dry cleaning, the bonds have a peel strength of 322 g/linear cm. After laundering treatments, the bonds have a peel strength of 322 g/linear cm. Bonds were also made at 120°C and a peel strength of 268 g/linear cm was obtained.

Example 10

A pellet blend of 5.0 weight percent Polymer B and 95.0 weight percent Polymer A is prepared in a V-cone mixer by blending for two hours. The pellet blend is fed from an extruder into a gear box and through a 0.3 mm spinning orifice at 270°C. An air cavity surrounds the spinning orifice and air at the temperature of the orifice is exited at high pressure at the orifice tip drawing the polymer down and cooling it and causing a melt blown web to form. The melt blow web is taken up on a silicone treated release paper. The web has a weight of 43.4 g/m$^2$. Bonds (10 cm×15 cm) of polyester/cotton twill are made with the web at a temperature of 150°C for 15 seconds on an electrically heated garment press. The 10 cm×15 cm (4″×6″) bonds are cut into 2.5 cm×15 cm pieces and tested on an Instron machine at 30.5 cm/min. The results are the averages of three measurements. The web from the pellet blend gives a T-peel strength of 1609 g/linear cm.

Example 11

A polyester nonwoven web is formed by passing polyester staple fiber through a Textile Card machine to give a web weight of 13.7 g/m$^2$. Medium powder (70—200 mesh) 210—74 µm of a 90/10 powder blend of Polymer A and Polymer B is fluidized with nitrogen and sprayed on the web with an electrostatic gun to give a uniform coating. The web is passed through a heating chamber of infrared heaters to fuse the adhesive powder and then through calendering rolls. The weight of adhesive in the web is 114.5 g/m$^2$. The web has a nice soft hand and is strong and uniformly bonded in both the machine and transverse directions.

Unless otherwise specified, all parts, percentages, ratios, etc., are by weight.

**Claims**

1. Adhesive compositions comprising a blend of
a) 10—99% by weight of a crystallizable copolyester having a melting point of 80—130°C., a heat of fusion of 1—10 calories per gram and an I.V. of 0.4—1.2 dl/g, said copolyester being derived from an acid selected from the group consisting of terephthalic acid and 1,4-cyclohexanedicarboxylic acid and a glycol selected from the group consisting of 1,4-butanediol, 1,6-hexanediol and mixtures of 1,4-butanediol and 1,6-hexanediol, said copolyester also being derived from about 20—60 mole % of a co-acid or a co-glycol, or about 20—75 mole % of a combination of a co-acid and a co-glycol, said co-acid and co-glycol being selected from the group consisting of isophthalic acid, C$_3$—C$_{12}$ aliphatic dibasic acids, aliphatic and cycloaliphatic glycols having 2—8 carbon atoms and diethylene glycol, and
b) 90—1% by weight of a substantially amorphous copolyester having a glass transition temperature of 50°C. or higher, a heat of fusion of less than 1 calorie per gram and an I.V. of 0.4—1.2 dl/g, said copolyesters being derived from at least one acid selected from the group consisting of terephthalic acid, isophthalic acid, and 1,4-cyclohexanedicarboxylic acid, and at least one glycol selected from the group consisting of ethylene glycol, diethylene glycol, and 1,4-cyclohexanedimethanol, with the proviso that said substantially amorphous copolyester contains at least two acids or at least two glycols, the second acid or glycol being present in an amount of 25—60 mole %.

2. Adhesive compositions according to Claim 1 wherein said crystallizable copolyester has an I.V. of 0.75—0.95 dl/g and is derived from 60—80 mole % terephthalic acid, 40—20 mole % glutaric acid, 45—65 mole % 1,4-butanediol and 35—55 mole % diethylene glycol, and said substantially amorphous copolyester has an I.V. of 0.45—0.80 dl/g and is derived from at least 80 mole % terephthalic acid, 60—80 mole % ethylene glycol and 40—20 mole % 1,4-cyclohexanedimethanol, said mole percentages being based on 100 mole % dicarboxylic acid and 100 mole % glycol, and each of said copolyesters being present in amounts within the range of 30—70 weight % based on their combined weight.

3. Adhesive compositions according to Claim 1 comprising about 30 to about 95% by weight of said crystallizable copolyester and about 5 to about 70% by weight of said substantially amorphous copolyester.

4. Adhesive compositions according to Claim 1 in the form of a powder blend and having a particle size of about 1—500 µm.

5. Adhesive compositions according to Claim 1 in the form of a film.

· 6. Fabric material bonded together with the adhesive composition of Claim 1.

7. Substrate material having a coating thereon comprising the composition of Claim 1.

## Patentansprüche

1. Klebstoffe aus einer Mischung aus:

a) 10—99 Gew.-% eines kristallisierbaren Copolyesters mit einem Schmelzpunkt von 80—130°C, einer Schmelzwärme von 1—10 Kalorien pro Gramm und einer I.V. von 0,4—1,2 dl/g, der sich ableitet von einer Säure aus der Gruppe bestehend aus Terephthalsäure und 1,4-Cyclohexandicarbonsäure und von einem Glykol ausgewählt aus der Gruppe bestehend aus 1,4-Butandiol, 1,6-Hexandiol und Mischungen aus 1,4-Butandiol und 1,6-Hexandiol und der sich ferner ableitet von etwa 20—60 Mol-% einer Co-Säure oder einem Co-Glykol oder etwa 20—75 Mol-% einer Kombination aus einer Co-Säure und einem Co-Glykol, wobei gilt, daß die Co-Säure und das Co-Glykol ausgewählt sind aus der Gruppe bestehend aus Isophthalsäure, aliphatischen dibasischen $C_3$—$C_{12}$-Säuren sowie aliphatischen und cycloaliphatischen Glykolen mit 2—8 Kohlenstoffatomen und Diethylenglykol und

b) 90—1 Gew.-% eines im wesentlichen amorphen Copolyesters mit einer Glasübergangstemperatur von 50°C oder darüber, einer Schmelzwärme von weniger als 1 Kalorie pro Gramm und einer I.V. von 0,4—1,2 dl/g, wobei sich der Copolyester von mindestens einer Säure, ausgewählt aus der Gruppe bestehend aus Terephthalsäure, Isophthalsäure und 1,4-Cyclohexandicarbonsäure und mindestens einem Glykol, ausgewählt aus der Gruppe bestehend aus Ethylenglykol, Diethylenglykol und 1,4-Cyclohexandimethanol ableitet, wobei gilt, daß der im wesentlichen amorphe Copolyester mindestens aus zwei Säuren oder mindestens zwei Glykolen aufgebaut ist und die zweite Säure oder der zweite Glykol in einer Menge von 25—60 Mol-% vorliegt.

2. Klebstoffe nach Anspruch 1, dadurch gekennzeichnet, daß der kristallisierbare Copolyester eine I.V. von 0,75—0,95 dl/g aufweist und sich von 60—80 Mol-% Terephthalsäure, 40—20 Mol-% Glutarsäure, 45—65 Mol-%, 1,4-Butandiol und 35—55 Mol-% Diethylenglykol ableitet und daß der im wesentlichen amorphe Copolyester eine I.V. von 0,45—0,80 dl/g aufweist und sich von mindestens 80 Mol-% Terephthalsäure, 60—80 Mol-% Ethylenglykol und 40—20 Mol-% 1,4-Cyclohexandimethanol ableitet, wobei sich die Mol-%-Angaben auf 100 Mol-% Dicarbonsäure und 100 Mol-% Glykol beziehen und wobei jeder der Copolyester in Mengen von 30—70 Gew.-%, bezogen auf ihre kombinierten Gewichte vorliegt.

3. Klebstoffe nach Anspruch 1, dadurch gekennzeichnet, daß sie zu etwa 30 bis etwa 95 Gew.-% aus dem kristallisierbaren Copolyester und zu etwa 5 bis etwa 70 Gew.-% aus dem im wesentlichen amorphen Copolyester bestehen.

4. Klebstoffe nach Anspruch 1, dadurch gekennzeichnet, daß sie in Form einer pulvrigen Mischung mit einer Teilchengröße von etwa 1—500 μm vorliegen.

5. Klebstoffe nach Anspruch 1, dadurch gekennzeichnet, daß sie in Form eines Films oder einer Feinfolie vorliegen.

6. Stoff- oder Gewebematerial, dadurch gekennzeichnet, daß es mit einem Klebstoff gemäß Anspruch 1 zusammengeklebt ist.

7. Substratmaterial mit einer hierauf aufgetragenen Beschichtung, dadurch gekennzeichnet, daß die Beschichtung aus einem Klebstoff gemäß Anspruch 1 besteht.

## Revendications

1. Compositions adhésives formées d'un mélange de:

a) 10 à 99% en masse d'un copolyester cristallisable ayant un point de fusion de 80 à 130°C, une chaleur de fusion de 1 à 10 calories par gramme et une viscosité inhérente de 0,4 à 1,2 dl/g, ledit copolyester étant dérivé d'un acide choisi dans le groupe formé par l'acide téréphtalique et l'acide 1,4-cyclohexanedicarboxylique, et d'un glycol choisi dans le groupe formé par le 1,4-butanediol et le 1,6-hexanediol, et des mélanges de 1,4-butanediol, le 1,6-hexanediol, ledit copolyester étant aussi dérivé d'environ 20 à 60% en mole d'un co-acide ou d'un co-glycol, ou d'environ 20 à 75% en mole d'une association d'un co-acide et d'un co-glycol, lesdits co-acide et co-glycol étant choisis dans le groupe formé par l'acide isophtalique, les acides aliphatiques dibasiques en $C_3$ à $C_{12}$, les glycols aliphatiques et cycloaliphatiques ayant de 2 à 8 atomes de carbone et le diéthylèneglycol, et

b) 90 à 1% en masse d'un copolyester pratiquement amorphe ayant une température de transition vitreuse d'au moins 50°C, une chaleur de fusion inférieure à 1 calorie par gramme, et une viscosité inhérente de 0,4 à 1,2 dl/g, lesdits copolyesters étant dérivés d'au moins un acide choisi dans le groupe formé par l'acide téréphtalique, l'acide isophtalique, et l'acide 1,4-cyclohexanedicarboxylique, et au moins un glycol choisi dans le groupe formé par l'éthylèneglycol, le diéthylèneglycol, et le 1,4-cyclohexanediméthanol, pourvu que ledit copolyester pratiquement amorphe contienne au moins deux acides ou au moins deux glycols, la quantité du second acide ou glycol étant égale à 25 à 60% en mole.

2. Compositions adhésives conformes à la revendication 1 dans lesquelles le copolyester cristallisable a une viscosité inhérente de 0,75 à 0,95 dl/g et est dérivé de 60 à 80% en mole d'acide téréphtalique, 40 à 20% en mole d'acide glutarique, 45 à 65% en mole de 1,4-butanediol et 35 à 55% en mole de diéthylèneglycol, et ledit copolyester pratiquement amorphe a une viscosité inhérente de 0,45 à 0,80 dl/g et

**0 126 766**

est dérivé d'au moins 80% en mole d'acide téréphtalique, 60 à 80% en mole d'éthylèneglycol et 40 à 20% en mole de 1,4-cyclohexanediméthanol, lesdits pourcentages étant basés sur 100 moles d'acide dicarboxylique et 100 moles de glycol, et chacun desdits copolyesters étant présent à des teneurs comprises entre 30 et 70% en masse par rapport à leur masse totale.

3. Compositions adhésives conformes à la revendication 1, comprenant d'environ 30 à environ 95% en masse du copolyester cristallisable et d'environ 5 à environ 70% en masse du copolyester pratiquement amorphe.

4. Compositions adhésives conformes à la revendication 1, ayant la forme d'un mélange en poudre dont les particules ont des dimensions d'environ 1 à 500 µm.

5. Compositions adhésives conformes à la revendication 1, ayant la forme d'un film.

6. Structure de tissus liés ensemble par la composition adhésive de la revendication 1.

7. Support recouvert d'une couche comprenant la composition de la revendication 1.